(19) Europäisches Patentamt
European Patent Office
Office européen des brevets

(11) **EP 4 509 248 B1**

(12) **EUROPEAN PATENT SPECIFICATION**

(45) Date of publication and mention
of the grant of the patent:
**18.03.2026 Bulletin 2026/12**

(21) Application number: **24193773.9**

(22) Date of filing: **09.08.2024**

(51) International Patent Classification (IPC):
*B22F 5/10* (2006.01)   *B22F 10/28* (2021.01)
*B33Y 80/00* (2015.01)   *B33Y 10/00* (2015.01)
*G01N 3/08* (2006.01)   *B22F 10/32* (2021.01)
*B22F 10/36* (2021.01)   *B33Y 50/02* (2015.01)
*C22C 33/02* (2006.01)

(52) Cooperative Patent Classification (CPC):
**B22F 10/28; B22F 5/10; B33Y 10/00; B33Y 80/00;
C22C 38/02; C22C 38/04; C22C 38/22;
C22C 38/24; C22C 38/42; C22C 38/48; G01N 3/08;**
B22F 10/32; B22F 10/36; B33Y 50/02;
C22C 33/0285;                                 (Cont.)

(54) **CRACK EVALUATION METHOD OF ADDITIVELY MANUFACTURED OBJECT AND CRACK
EVALUATION DEVICE**

RISSBEURTEILUNGSVERFAHREN EINES GENERATIV GEFERTIGTEN OBJEKTS UND
RISSBEURTEILUNGSVORRICHTUNG

PROCÉDÉ D'ÉVALUATION DE FISSURE D'UN OBJET FABRIQUÉ DE MANIÈRE ADDITIVE ET
DISPOSITIF D'ÉVALUATION DE FISSURE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.08.2023 JP 2023133129**

(43) Date of publication of application:
**19.02.2025 Bulletin 2025/08**

(73) Proprietor: **Proterial, Ltd.
Tokyo 135-0061 (JP)**

(72) Inventor: **AOTA, Kinya
Tokyo, 135-0061 (JP)**

(74) Representative: **Becker, Eberhard
Becker Kurig & Partner
Patentanwälte mbB
Bavariastraße 7
80336 München (DE)**

(56) References cited:
**EP-A1- 4 427 912        WO-A1-2023/068268
WO-A1-2023/080190    CN-A- 108 817 386
US-A1- 2024 335 879**

(52) Cooperative Patent Classification (CPC): (Cont.)
G01N 2203/0017; G01N 2203/0057;
G01N 2203/0066; G01N 2203/0248;
G01N 2203/0298; Y02P 10/25

## Description

BACKGROUND

Technical Field

The disclosure relates to a crack evaluation method of an additively manufactured object and a crack evaluation device.

Related Art

Among additive manufacturing processes, in a laser powder bed fusion (LPBF) method involving repeatedly spreading a powder and selectively melting and solidifying the powder by laser, since the power is melted by laser and rapidly cooled and solidified to form a shape, a tensile stress tends to act on the manufactured object and cause cracking due to solidification shrinkage during rapid cooling and thermal contraction during post-manufacturing cooling. The susceptibility to cracking due to such a tensile stress, i.e., a crack sensitivity to thermal stress cracking, varies depending on the composition of the raw material powder, manufacturing conditions, and the shape of the manufactured object.

To manufacture a product or a prototype using the LPBF method, it is desirable to evaluate and learn about the crack sensitivity in advance, and on this basis, select the composition of the raw material powder, the manufacturing conditions, the shape of the manufactured object, etc. Conventionally, methods for evaluating cracking include cutting a cross-section of the manufactured object and polishing the cut surface. However, such methods are time-consuming in evaluation.

In the LPBF method, a complex three-dimensional manufactured object is manufactured by repeating a process of spreading a powder and selectively irradiating laser to melt and solidify the powder. The laser irradiated is very fine, with a diameter of 50 to 150 $\mu$m, and the laser is scanned at a high speed of 500 to 2000 mm/s. Thus, localized melting and solidification occur, a tensile stress tends to occur in the manufactured object due to solidification shrinkage and thermal contraction resulting from a temperature drop. When this stress exceeds a threshold, cracking occurs. Since the crack sensitivity varies depending on the composition of the powder, the manufacturing conditions, the shape of the manufactured object, etc., there has been a demand for a method to quantitatively and simply evaluate respective influences of these factors.

As a simple method to evaluate the crack sensitivity, in Non-Patent Document 1, a notch is provided at a manufactured object to make it more prone to cracking, and manufacturing conditions are changed to evaluate whether a crack is present.

[Related Art Documents]

[Non-Patent Documents]

[Non-Patent Document 1] Residual Stress Relief Technology Using Phase Transformation in Metal Additive Manufacturing: Journal of Smart Processing, Vol. 10, No. 4 (July 2021), pp. 163-170

[Patent Documents]

WO 2023/080190 A1 relates to a dimensional quality evaluation method for additively manufactured object, and evaluation system therefor. WO 2023/068268 A1 relates to a method for measuring deformation amount of deformation part of additively fabricated test object and method for determining proper conditions for additive fabrication. CN 108 817 386 A relates to an interlayer comb splicing method for multibeam selective laser melting.

SUMMARY

The crack evaluation method disclosed in Non-Patent Document 1 proposes an evaluation shape for a crack based on the LPBF method, but the evaluation is performed based on the pattern of crack by visual inspection, and quantitative evaluation is difficult. For example, compositions prone to cracking, such as martensitic stainless steel, can be evaluated, but compositions less prone to cracking cannot be evaluated.

Thus, it is an objective of the disclosure to provide a crack evaluation method and a crack evaluation device capable of quantitatively evaluating a crack sensitivity (hereinafter referred to as a "crack sensitivity") to thermal stress cracking of a manufactured object manufactured by additive manufacturing such as an LPBF method, and capable of evaluating even compositions less prone to cracking. The present invention is provided in the appended claims. The following disclosure serves a better understanding of the present invention.

[Means for Solving Problems]

The disclosure provides a crack evaluation method of an additively manufactured object, which is a method evaluating a crack sensitivity of an additively manufactured object. The crack evaluation method includes the following. A crack evaluation device is additively manufactured using a raw material powder. The crack evaluation device includes: a body part, a base part opposed to the body part, a connecting part connecting one end side of the body part and the base part, a notch forming part connecting another end side of the body part and the base part, and a comb tooth part connecting, by comb teeth, the body part and the base part between the connecting part and the notch forming part. The crack sensitivity is evaluated based on cracked comb teeth at the crack evaluation device serving as the additively manufactured object.

Accordingly, even with an additively manufactured object of which a crack sensitivity is unknown, the crack sensitivity can be quantitatively evaluated based on a relationship between a crack length obtained from a quantity of cracked comb teeth and a length of the body part along an arrangement direction of the comb teeth. In the disclosure, defects such as cracks and fissures are collectively referred to as "cracks".

Accordingly, even with a manufactured object of a composition less prone to cracking, the crack sensitivity can be evaluated.

The evaluating may include deriving manufacturing conditions for a lower crack sensitivity based on a correlation between a crack length obtained from a quantity of cracked comb teeth and manufacturing conditions.

Accordingly, manufacturing conditions less prone to cracking can be explored and selected.

Furthermore, an improved composition with a lower crack sensitivity may be derived based on an evaluation result obtained in the evaluating, the improved composition may be used in the additively manufacturing, the crack sensitivity of the manufactured crack evaluation device may be evaluated, and composition improvement and evaluation of the crack sensitivity may be subsequently repeated to derive a composition with a lower crack sensitivity.

Accordingly, compositions less prone to cracking can be explored and selected.

Further, the disclosure provides a crack evaluation device evaluating a crack sensitivity of an additively manufactured object. The crack evaluation device includes: a body part, a base part opposed to the body part, a connecting part connecting one end side of the body part and the base part, a notch forming part connecting another end side of the body part and the base part, and a comb tooth part connecting, by comb teeth, the body part and the base part between the connecting part and the stress concentration part.

In the claimed shape of the crack evaluation device, a front curved surface is provided at the another end side of the body part, side curved surfaces are provided on both sides of the front curved surface, and the front curved surface of the body part and the comb tooth part are connected to each other via the notch forming part.

[Effects]

According to the disclosure, it is possible to quantitatively evaluate a crack sensitivity to thermal stress cracking of a manufactured object manufactured by additive manufacturing. Further, manufacturing conditions less prone to cracking and compositions less prone to cracking can be explored and selected.

BRIEF DESCRIPTION OF DRAWINGS

FIG. 1 is a perspective view of a crack evaluation device.
FIG. 2A and FIG. 2B are respectively a front view and a side view of the crack evaluation device.
FIG. 3 is a cross-sectional view taken along line A-B in FIG. 2A.
FIG. 4 is an enlarged cross-sectional view of a part C in FIG. 3.
FIG. 5 is a flowchart of a crack evaluation method.
FIG. 6 is a side view photograph showing a cracked state at a comb tooth part after manufacturing of a crack evaluation device.
FIG. 7 is a graph showing a relationship between a length of a crack evaluation device (additively manufactured object) and a crack length of various alloys.
FIG. 8 is a graph showing a relationship between a scanning speed and a crack length in manufacturing of tool steel.

DESCRIPTION OF EMBODIMENTS

Hereinafter, embodiments of the disclosure will be described with reference to the drawings.

[Crack evaluation device]

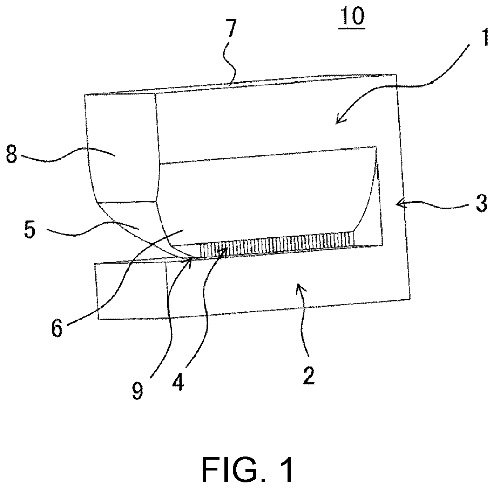

FIG. 1 shows a perspective view of a crack evaluation device 10 according to an embodiment. The crack evaluation device 10 is an additively manufactured object composed of a body part 1, a base part 2, a connecting part 3, and a comb tooth part 4. Additive manufacturing is performed toward an upward side on the paper surface. First, the base part 2 is manufactured, then the comb tooth part 4 and the connecting part 3 are manufactured, and finally the body part 1 is manufactured. In this embodiment, the body part 1 has a front curved surface 5, side curved surfaces 6 on both sides of the front curved surface 5, an upper planar surface 7, and a side planar surface 8. The body part 1 is in a shape in which the front curved surface 5 and the side curved surfaces 6 are tapered toward the base part 2. Further, the base part 2 has a flat plate shape. The body part 1 and the base part 2 are opposed to each other. One end between the body part 1 and the base part 2 is connected by the connecting part 3, and the other end is connected by a stress concentration part 9 connected from the front curved surface 5 at the body part 1. Between the connecting part 3 and the stress concentration part 9, the body part 1 and the base part 2 are connected by the comb tooth part 4 composed of a plurality of comb teeth 40 with a predetermined gap present therebetween. That is, the connecting part 3, the comb tooth part 4, and the stress concentrating part 9, which are integrally formed, are disposed in a straight line shape in this sequence. With such a structure, during additive manufacturing and/or during cooling to room temperature after manufacturing, when the body part 1 contracts and the body part 1 deforms into a curved shape in a longitudinal direction, since one side in the longitudinal direction is fixed by the connecting part 3, stress is concentrated at the stress concentration part 9 (also referred to as a notch forming part) formed by a notch, and this position serves as a starting point for the comb teeth 40 at the end to crack and separate. As deformation progresses further, adjacent comb teeth 40 also crack, and cracking of the comb tooth part 4 progresses. On the other hand, the connecting part 3, which does not include a gap as the comb tooth part 4, is provided on the opposite side of the stress concentration part 9, so cracking is prevented from occurring from the comb teeth 40 in the vicinity of the connecting part 3. Accordingly, a composition of a low crack sensitivity will have fewer cracked comb teeth, and a composition of a high crack sensitivity will have more cracked comb teeth. In this manner, even with an additively manufactured object of which a crack sensitivity is unknown, the crack sensitivity can be evaluated based on the number of cracked comb teeth.

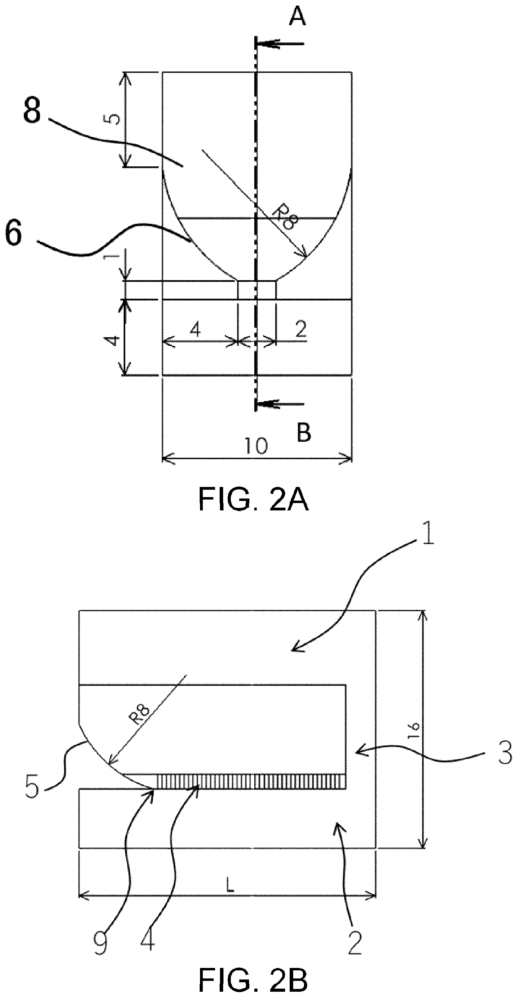

FIG. 2A and FIG. 2B respectively show a front view and a side view of the crack evaluation device in a more specific embodiment. The body part 1 and the base part 2 extend in a longitudinal direction (length direction) with a predetermined length L, a height of 16 mm, and a width of 10 mm. The front curved surface 5 in an arcuate shape with a front curvature radius R of 8 mm is provided on the side opposite to the connecting part 3 at one end of the body part 1. The front curved surface 5 and the comb tooth part 4 are connected to each other via the stress concentration part 9. By configuring the front curved surface 5 in an arcuate shape rather than a straight line, a greater stress is caused to act on the stress concentration part 9 to make it more prone to cracking. Further, the side curved surfaces 6 with a curvature radius R of 8 mm are provided on side surfaces of the longitudinal direction, on both sides of a short direction (width direction) at the other end of the body part 1. At a lower part, the side curved surfaces 6 are connected to the comb tooth part 4. Accordingly, since the width of the comb tooth part 4 can be narrowed to approximately 2 mm, the comb tooth part 4 is configured to be prone to cracking. Further, by providing the side planar surface 8 with a height of 5 mm on the side surface of the body part 1, the stress acting on the stress concentration part 9 side is increased to be prone to cracking. The length L of the body part 1 and the length L of the base part 2 may also be different from each other and may be designed as appropriate.

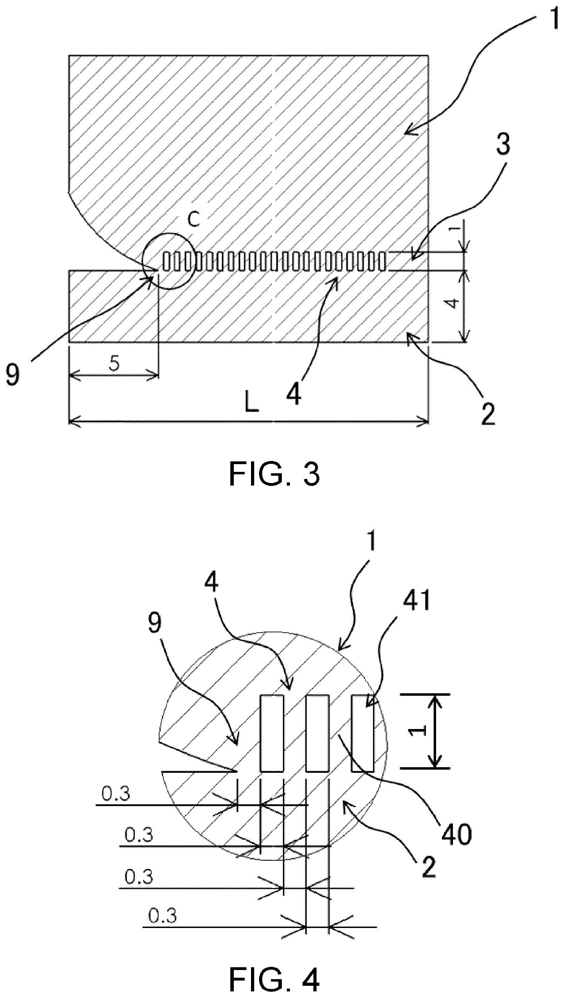

Further, the stress concentration part 9 may be designed as appropriate as long as the stress concentration part 9 is in a form at which a stress concentrates. For example, the stress concentration part 9 may be configured as a narrow part, a concave groove shape, a V-shape, a U-shape, etc., but is preferably configured in a sharply cut notch shape (hereinafter described as a notch part as an example). FIG. 3 shows an A-B cross-section in FIG. 2A. The front curved surface 5 of the body part 1 and the planar surface of the base part 2 on the body part 1 side define a notch shape. The notch part 9 is provided at an end (lower end) of a connecting surface between the base part 2 and the comb tooth part 4. The position of the notch part 9 may also be provided at an end (upper end) of the connecting surface between the comb tooth part 4 and the body part 1. In other words, the notch part 9 may be configured at a position that serves as a starting point of cracking with respect to the comb tooth part 4 and at which a stress concentrates, and similar effects are achieved.

Next, FIG. 4 shows an enlarged cross-sectional view of a part C in FIG. 3. The comb tooth part 4 is connected to each of the body part 1 and the base part 2 with a plurality of comb teeth 40. Herein, a plurality of slits (gaps) 41 with a width of 0.3 mm are provided from a position 0.3 mm away from the notch part 9 via the comb teeth 40 having a width of 0.3 mm. By providing the slits 41, cracking is more likely to occur at the comb tooth part 4, and cracking can occur and can be evaluated even with a composition of a low crack sensitivity. Further, by counting the number of cracked comb teeth from the appearance, quantitative evaluation can be easily performed. Further, the crack sensitivity can also be evaluated in more detail using a stereo microscope based on the appearance of the additively manufactured object. The forms, pitches, widths, heights, etc., of the comb teeth and the slits may be changed in design as appropriate. For example, the comb teeth may be provided in a plurality of rows in the longitudinal direction, or may be provided in two rows. In such cases, the comb teeth and the slits may be arranged alternately. Further, the shape of the slit does not have to be a rectangular cuboid, and may also be changed as appropriate to a cylindrical shape, an elliptical cylindrical shape, a triangular prismatic shape, etc.

[Crack evaluation method]

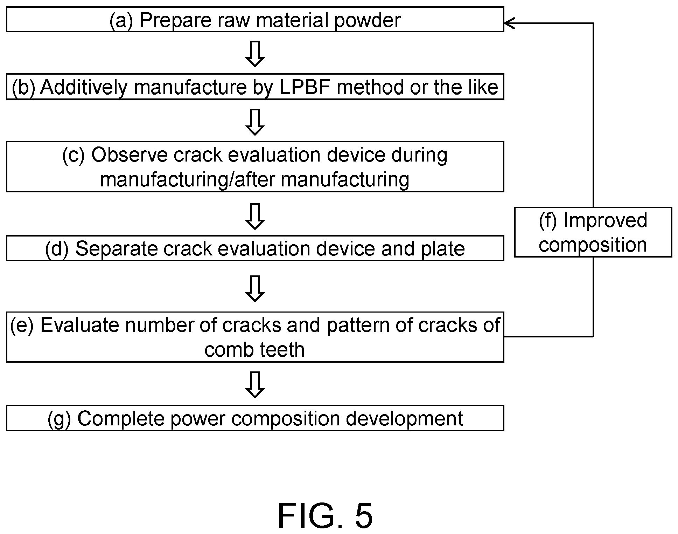

FIG. 5 shows a flowchart of a crack evaluation method according to an embodiment of the disclosure. In the crack evaluation method, a crack pattern of the comb tooth part 4, mainly the number of cracks of the comb teeth 40, is observed when the crack evaluation device 10 described above is actually additively manufactured. Accordingly, a crack sensitivity of the raw material composition used in additive manufacturing can be evaluated, and the evaluation result can be fed back into the raw material composition to perform composition improvements and ultimately serve as a means for selecting a raw material composition that is less prone to cracking.

First, a raw material powder of a predetermined composition is prepared (step a). When additively manufacturing a product having new properties, prototyping is repeatedly performed with the predetermined composition, and the composition of the raw material powder is determined while making improvements.

Then, using a method such as LPBF, a crack evaluation device 10 is additively manufactured on a plate (step b). At this time, manufacturing conditions of the LPBF method are expressed by a formula (1) below as a correlation between a heat source energy density and manufacturing conditions.

$$J = P / (v \times a \times t) \quad ... (1)$$

J: heat source energy density (J/mm$^3$), P: power of laser or electron beam (W), v: scanning speed (mm/s), a: scanning pitch (mm), t: layer thickness (mm)

Thus, the heat source energy density J may be controlled by varying the power P of the laser or electron beam, the scanning speed v, the scanning pitch a, and the layer thickness t. The relationship with the power P of the laser or electron beam, the scanning speed v, and the scanning pitch a is significant as manufacturing parameters to be controlled, and the heat source energy density is preferably controlled by adjusting at least one of the three parameters. Among these, adjusting the scanning speed v is particularly effective and preferable.

Next, during the additive manufacturing process and/or a cooling process after the additive manufacturing, it is observed whether cracking does not occur at the comb tooth part 4 of the crack evaluation device 10 (step c). Specifically, since a tensile stress acts significantly during cooling, it is possible to confirm by visual inspection whether cracking occurs at the comb tooth part, which is the additively manufactured object after the additive manufacturing. At this stage, it is sufficient to simply confirm whether a crack is present, and it is not necessarily required to, for example, record and evaluate the number of cracked comb teeth. Further, although it is preferable to also observe cracking of the comb tooth part during the additive manufacturing process, at this stage as well, it is sufficient to simply confirm whether a crack is present. In other words, the observation process involves having an operator simply looking at the manufactured object during the additive manufacturing process or the cooling process thereafter with normal attention required during the manufacturing process, or simply observing a degree of warping or the like of the manufactured object during the cooling process, and the observation process may also be omitted.

Next, the crack evaluation device 10 and the plate are separated by wire cutting, and the crack evaluation device 10, which is the additively manufactured object, is taken out (step d).

Next, the number of cracks and the pattern of cracks of the comb teeth of the crack evaluation device 10 are observed and evaluated (step e). An analytical device capable of magnified observation, such as a stereo microscope, is preferably used for the observation of cracks. In this process, the number of cracks of the comb teeth 40 is observed and the pattern of cracks is observed to evaluate the crack sensitivity of the raw material composition used. For example, an evaluation means may perform evaluation simply based on the number of cracked comb teeth 40. Further, the crack sensitivity may be evaluated based on a correlation between a crack length obtained from the number of cracked comb teeth 40 and a predetermined length of the body part. At this time, the design of the stress concentration part (notch part) 9 or the comb tooth part 4 may be changed, i.e., the acting stress may be varied, to evaluate the crack sensitivity from compositions prone to cracking to compositions less prone to cracking. Further, based on the correlation between the crack length obtained from the number of cracked comb teeth and the manufacturing conditions during additive manufacturing, appropriate manufacturing conditions can be identified to explore manufacturing conditions that are less prone to cracking. A case including such a process of exploring manufacturing conditions less prone to cracking is also included in the crack evaluation method of an additively manufactured object according to the disclosure.

Then, the evaluation result is reflected in the design of the raw material composition to obtain an improved composition and feed back to step (a) (step f). The embodiment including step f shows an example in which the evaluation result is fed back into the raw material composition to explore composition improvements. Thus, based on the evaluation result obtained in the evaluation process, an improved composition is designed, the improved composition is used in a new additive manufacturing process to manufacture a new manufactured object, and a crack sensitivity of a crack evaluation device newly manufactured is evaluated to feed back a further improved composition. Hereinafter, this step is repeated as appropriate, i.e., repeating composition improvement and evaluation, and development of a final powder composition is completed (step g). A case including such a process of exploring compositions less prone to cracking is also included in the crack evaluation method of an additively manufactured object according to the disclosure. At this time, at least one parameter among the power P of laser or electron beam, the scanning speed v, and the scanning pitch a is preferably adjusted to identify the optimal manufacturing conditions while performing evaluation.

[Examples]

The disclosure will be specifically described below based on Examples.

(Example 1)

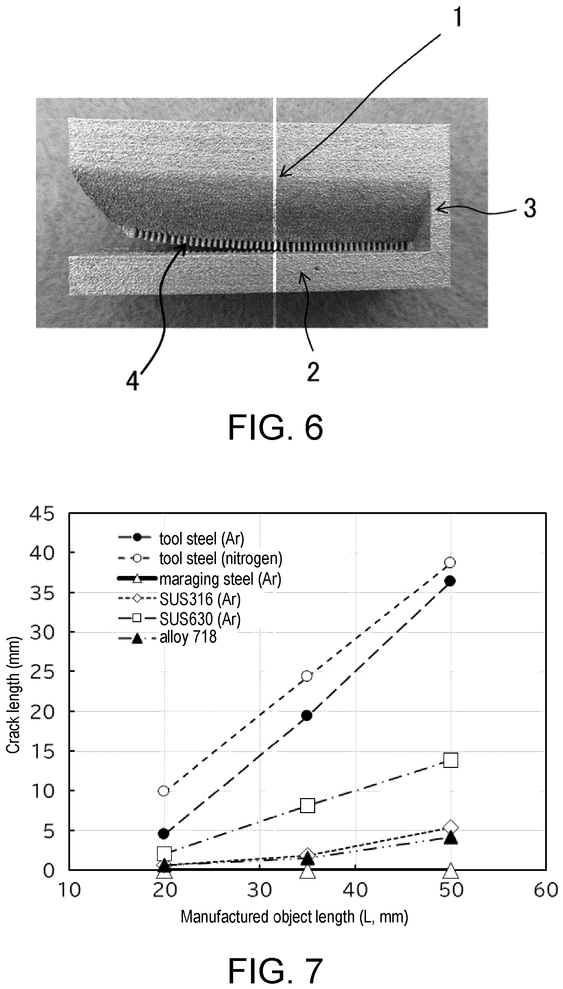

A crack evaluation device 10 in FIG. 1 was additively manufactured according to the LPBF method using a raw material powder having a composition of tool steel (JIS standard: SKD61) of an average particle diameter of 39 μm. A length L of the crack evaluation device 10 was set to 35 mm. Manufacturing conditions were as follows: Ar atmosphere manufacturing, a laser diameter of 75 μm, a layer thickness t of 30 μm, a scanning speed v of 1000 mm/s, a laser power P of 180 W, and a scanning pitch a of 0.05 mm. As a result, warping occurred at the body part 1, and cracking occurred at the comb tooth part 4 in the vicinity of the base part 2. FIG. 6 shows a side view photograph of the crack evaluation device (additively manufactured object) after cooling. A crack sensitivity can be evaluated according to the number of cracked comb teeth. In other words, the larger the number of cracks, the higher the crack sensitivity. In the case of this example, the number of cracks observed from one side curved surface 6 was 32, and the number of cracks observed from the opposite side curved surface 6 was 33. Herein, the average value was taken to be 32.5. Although the crack evaluation device 10 is symmetrical with respect to its longitudinal direction, the number of cracks is preferably evaluated from both sides since the number of cracks may appear different. The method of Non-Patent Document 1 evaluates whether a crack is present, but the disclosure can further perform quantitative evaluation based on the number of cracked comb teeth in this manner.

(Example 2)

The correlation between the length L of the additively manufactured object of the crack evaluation device 10 and the crack length was investigated for each material type. Specifically, five compositions were compared, including tool steel, maraging steel, SUS316 stainless steel, SUS630 stainless steel, and alloy 718. Further, tool steel was manufactured in two atmospheres including Ar atmosphere and nitrogen atmosphere. The other compositions were manufactured only in Ar atmosphere. As the physical properties such as melting points differ for each composition, manufacturing conditions ensuring an internal void ratio of 0.1% or less were respectively selected. In the case of tool steel, the same manufacturing conditions were set as in Example 1, and the internal void ratio was 0.005%. FIG. 7 shows a relationship between the length L of the crack evaluation device (additively manufactured object) and the crack length of each alloy. The influence due to the length when the length L of the crack evaluation device 10 was set to 20 mm, 35 mm, and 50 mm was investigated on the horizontal axis. The vertical axis represents the crack length (mm). Herein, the crack length was a value obtained by counting, in magnification using a stereo microscope, the number of cracked comb teeth 40 from each side curved surface, and multiplying the average value of the numbers of cracked comb teeth by 0.6 mm. The average value was multiplied by 0.6 mm because the width of the comb tooth 40 was 0.3 mm and the width of the slit 41 was 0.3 mm, totaling to 0.6 mm. In this example, the relationship between the length L of the crack evaluation device and the evaluation of the crack sensitivity is compared using length as an indicator to make it easy to understand. Thus, the units of the length L of the crack evaluation device and the crack length are preferably unified as mm.

The results in FIG. 7 show a tendency that as the length L of the manufactured object serving as the crack evaluation device 10 increases, cracking is more likely to occur. This is because the stress acting on the stress concentration part 9 due to deformation of the body part 1 increases. Thus, it can be said that designing the crack evaluation device 10 to be somewhat long makes it easier to evaluate the crack sensitivity. However, if the crack evaluation device 10 is configured to be too long, it will take more time for manufacturing, and more raw material powder will be required accordingly. Hence, the length L of the crack evaluation device is preferably approximately 20 to 50 mm.

Further, the comparison of compositions showed a tendency that the crack length decreases and cracking is less likely to occur in a sequence from tool steel, SUS630 stainless steel, SUS316 stainless steel, alloy 718, to maraging steel. It is possible to quantitatively evaluate the crack sensitivity of each composition, which can be taken as a criterion for composition selection. Among them, with materials less prone to cracking such as SUS316 stainless steel and alloy 718, it has been difficult to detect occurrence of cracking itself using conventional methods. Thus, being capable of confirming cracking by visual inspection in this Example is extremely effective. Although occurrence of cracking could not be confirmed for maraging steel in this Example, it is possible to evaluate minute cracks by increasing the length of the crack evaluation device or adjusting the shape of the notch part or the spacing of the slit.

By evaluating the number of cracked comb teeth of each crack evaluation device according to a plurality of compositions as described above, the crack sensitivity can be compared. Accordingly, differences in the crack sensitivity due to composition differences can be quantitatively evaluated easily when developing materials of new compositions, and it is possible to apply to the development of materials of lower crack sensitivities. For example, two types of powders were prepared, respectively with carbon contents of 0.35 mass% and 0.4 mass% as additive elements of tool steel, and crack evaluation devices 10 were manufactured under the same manufacturing conditions using the respective powders. Then, the crack sensitivity resulting from the carbon content can be compared by investigating the number of cracks of the respective comb teeth 40. By repeating this process and performing evaluation, the embodiment can be applied to composition development of tool steel of a low crack sensitivity.

Further, in the case of Ar atmosphere manufacturing and nitrogen atmosphere manufacturing of tool steel, there was a tendency that the nitrogen atmosphere contributes to a higher crack sensitivity. This indicates that it is also possible to compare differences due to atmospheric gases. For example, if reducing the crack sensitivity is prioritized, manufacturing may be performed using Ar gas which is more expensive. Conversely, if a higher crack sensitivity does not pose a problem to the properties of the manufactured object, nitrogen gas which is less expensive may be used, allowing for the selective application of atmospheric gases for manufacturing and the like.

(Example 3)

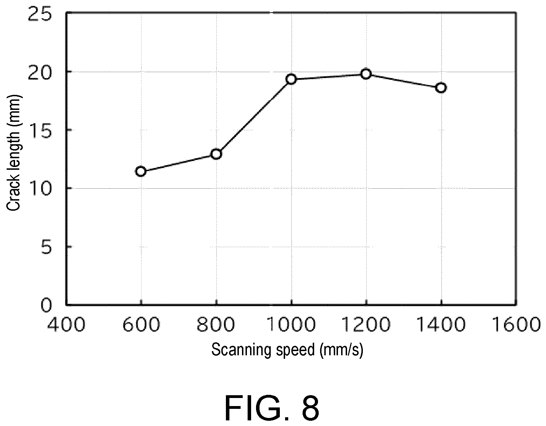

Next, a correlation between the crack length and the manufacturing conditions was investigated. Specifically, the composition of the raw material powder was tool steel (JIS standard: SKD61), with Ar atmosphere manufacturing, a laser diameter of 75 $\mu$m, a layer thickness t of 30 $\mu$m, a laser power P of 180 W, a scanning pitch a of 0.05 mm, a length L of 30 mm of the manufactured object, and a scanning speed v was varied from 600 to 1400 mm/s. FIG. 8 shows a relationship between the scanning speed and the crack length in the manufacturing of tool steel. The horizontal axis represents the scanning speed, and the vertical axis represents the crack length as in FIG. 7. As a result, at high scanning speeds of 1000 to 1400 mm/s, the crack length was high values of 18 to 20 mm. On the other hand, at low scanning speeds of 800 to 600 mm/s, the crack length was contained to low values of 11 to 13 mm. Accordingly, it was learned that lower scanning speeds tend to lead to less cracking. In addition to the scanning speed, it is also considered possible to identify manufacturing conditions that suppress the crack length by operating the power P of laser or electron beam or the scanning pitch a. In this manner, the disclosure can be used for the selection of manufacturing conditions that suppress cracking.

[Reference Signs List]

1: body part, 2: base part, 3: connecting part, 4: comb tooth part, 5: front curved surface, 6: side curved surface, 7: upper planar surface, 8: side planar surface, 9: stress concentration part (notch part), 10: crack evaluation device, 40: comb tooth, 41: slit (gap)

**Claims**

1. A crack evaluation method of an additively manufactured object, which is a method evaluating a crack sensitivity of an additively manufactured object, the crack evaluation method comprising:

    additively manufacturing a crack evaluation device (10) using a raw material powder, the crack evaluation device (10) comprising: a body part (1), a base part (2) opposed to the body part (1), a connecting part (3) connecting one end side of the body part (1) and the base part (2), a notch forming part (9) connecting another end side of the body part (1) and the base part (2), and a comb tooth part (4) connecting, by comb teeth (40), the body part (1) and the base part (2) between the connecting part (3) and the notch forming part (9); and
    evaluating the crack sensitivity based on cracked comb teeth (40) at the crack evaluation device (10) serving as the additively manufactured object,
    the crack evaluation method being **characterized by** comprising:
    evaluating the crack sensitivity based on a relationship between a crack length obtained from a quantity of cracked comb teeth (40) and a length of the body part (1) along an arrangement direction of the comb teeth (40).

2. The crack evaluation method of an additively manufactured object according to claim 1, wherein the evaluating comprises deriving manufacturing conditions for a lower crack sensitivity based on a correlation between a crack length obtained from a quantity of cracked comb teeth (40) and manufacturing conditions,

    wherein the manufacturing conditions are expressed by the following formula:

    $$J = P \,/\, (v \times a \times t),$$

    wherein J is a heat source energy density, P is a power of laser or electron beam, v is a scanning speed, a is a scanning pitch, and t is a layer thickness.

3. The crack evaluation method of an additively manufactured object according to claim 1, wherein an improved composition with a lower crack sensitivity is derived based on an evaluation result obtained in the evaluating, the improved composition is used in the additively manufacturing, the crack sensitivity of the manufactured crack evaluation device (10) is evaluated, and composition improvement and evaluation of the crack sensitivity are subsequently repeated to derive a composition with a lower crack sensitivity.

4. A crack evaluation device (10) configured to evaluate a crack sensitivity of an additively manufactured object, the crack evaluation device (10) comprising:

    a body part (1), a base part (2) opposed to the body part (1), a connecting part (3) connecting one end side of the body part (1) and the base part (2), a notch forming part (9) connecting another end side of the body part (1) and the base part (2), and a comb tooth part (4) connecting, by comb teeth (40), the body part (1) and the base part (2) between the connecting part (3) and the notch forming part (9),

wherein the crack evaluation device (10) is the additively manufactured object,

the crack evaluation device (10) being **characterized in that**

a front curved surface (5) is provided at the another end side of the body part (1) in a length direction of the body part (1), side curved surfaces (6) are provided on both sides of the front curved surface (5) in a width direction of the body part (1), and the front curved surface (5) of the body part (1) and the comb tooth part (4) are connected to each other via the notch forming part (9).

**Patentansprüche**

1. Verfahren zur Rissbewertung eines additiv gefertigten Objekts, bei dem es sich um ein Verfahren zur Bewertung einer Rissempfindlichkeit eines additiv gefertigten Objekts handelt, wobei das Verfahren zur Rissbewertung umfasst:

   additives Fertigen einer Rissbewertungsvorrichtung (10) unter Verwendung eines Rohmaterialpulvers, wobei die Rissbewertungsvorrichtung (10) umfasst: ein Körperteil (1), ein dem Körperteil (1) gegenüberliegendes Basisteil (2), ein Verbindungsteil (3), das eine Endseite des Körperteils (1) und das Basisteil (2) verbindet, ein Kerbausbildungsteil (9), das eine andere Endseite des Körperteils (1) und das Basisteil (2) verbindet, und ein Kammzahnteil (4), das durch Kammzähne (40) das Körperteil (1) und das Basisteil (2) zwischen dem Verbindungsteil (3) und dem Kerbausbildungsteil (9) verbindet; und
   Bewertung der Rissempfindlichkeit auf der Grundlage von gerissenen Kammzähnen (40) an der Rissbewertungsvorrichtung (10), die als das additiv gefertigte Objekt dient,
   wobei das Rissbewertungsverfahren **dadurch gekennzeichnet ist, dass** es umfasst:
   Bewertung der Rissempfindlichkeit auf der Grundlage einer Beziehung zwischen einer Risslänge, die aus einer Anzahl gerissener Kammzähne (40) erhalten wird, und einer Länge des Körperteils (1) entlang einer Anordnungsrichtung der Kammzähne (40).

2. Verfahren zur Rissbewertung eines additiv gefertigten Objekts nach Anspruch 1, wobei die Bewertung das Ableiten von Fertigungsbedingungen für eine geringere Rissempfindlichkeit auf der Grundlage einer Korrelation zwischen einer aus einer Anzahl von gerissenen Kammzähnen (40) erhaltenen Risslänge und Fertigungsbedingungen umfasst,

   wobei die Fertigungsbedingungen durch die folgende Formel ausgedrückt werden:

   $$J = P / (v \times a \times t),$$

   wobei J eine Wärmequellen-Energiedichte ist, P eine Leistung eines Laser- oder Elektronenstrahls ist, v eine Abtastgeschwindigkeit ist, a ein Abtastabstand ist und t eine Schichtdicke ist.

3. Verfahren zur Rissbewertung eines additiv gefertigten Objekts nach Anspruch 1, wobei eine verbesserte Zusammensetzung mit einer geringeren Rissempfindlichkeit auf der Grundlage eines bei der Bewertung erhaltenen Bewertungsergebnisses abgeleitet wird, die verbesserte Zusammensetzung bei der additiven Fertigung verwendet wird, die Rissempfindlichkeit der gefertigten Rissbewertungsvorrichtung (10) bewertet wird und die Verbesserung der Zusammensetzung und die Bewertung der Rissempfindlichkeit anschließend wiederholt werden, um eine Zusammensetzung mit einer geringeren Rissempfindlichkeit abzuleiten.

4. Rissbewertungsvorrichtung (10), die konfiguriert ist, eine Rissempfindlichkeit eines additiv gefertigten Objekts zu bewerten, wobei die Rissbewertungsvorrichtung (10) umfasst:

   ein Körperteil (1), ein dem Körperteil (1) gegenüberliegenden Basisteil (2), ein Verbindungsteil (3), das eine Endseite des Körperteils (1) und das Basisteil (2) verbindet, ein Kerbausbildungsteil (9), das eine andere Endseite des Körperteils (1) und das Basisteil (2) verbindet, und ein Kammzahnteil (4), das durch Kammzähne (40) das Körperteil (1) und das Basisteil (2) zwischen dem Verbindungsteil (3) und dem Kerbausbildungsteil (9) verbindet,
   wobei die Rissbewertungsvorrichtung (10) das additiv gefertigte Objekt ist,
   wobei die Rissbewertungsvorrichtung (10) **dadurch gekennzeichnet ist, dass**
   eine vordere gekrümmte Oberfläche (5) an der anderen Endseite des Körperteils (1) in einer Längsrichtung des Körperteils (1) vorgesehen ist, seitliche gekrümmte Oberflächen (6) an beiden Seiten der vorderen gekrümmten Oberfläche (5) in einer Querrichtung des Körperteils (1) vorgesehen sind und die vordere gekrümmte Oberfläche (5) des Körperteils (1) und das Kammzahnteil (4) über das Kerbausbildungsteil (9) miteinander verbunden sind.

## Revendications

1. Procédé d'évaluation des fissures d'un objet fabriqué de manière additive, qui est un procédé d'évaluation de la sensibilité aux fissures d'un objet fabriqué de manière additive, le procédé d'évaluation des fissures comprenant :

   la fabrication additive d'un dispositif d'évaluation des fissures (10) à l'aide d'une poudre de matière première, le dispositif d'évaluation des fissures (10) comprenant : une partie corps (1), une partie base (2) opposée à la partie corps (1), une partie de connexion (3) reliant une extrémité de la partie corps (1) et la partie base (2), une partie formant encoche (9) reliant l'autre extrémité de la partie de corps (1) et la partie de base (2), et une partie à dents de peigne (4) reliant, par des dents de peigne (40), la partie de corps (1) et la partie de base (2) entre la partie de connexion (3) et la partie formant encoche (9) ; et
   évaluer la sensibilité aux fissures sur la base des dents de peigne fissurées (40) au niveau du dispositif d'évaluation de fissures (10) servant d'objet fabriqué de manière additive, le procédé d'évaluation de fissures étant **caractérisé en ce qu'**il comprend:
   l'évaluation de la sensibilité aux fissures sur la base d'une relation entre une longueur de fissure obtenue à partir d'une quantité de dents de peigne fissurées (40) et une longueur de la partie de corps (1) le long d'une direction d'agencement des dents de peigne (40).

2. Procédé d'évaluation de fissures d'un objet de manière additive selon la revendication 1, dans lequel l'évaluation comprend la dérivation de conditions de fabrication pour une sensibilité à la fissures plus faible sur la base d'une corrélation entre une longueur de fissure obtenue à partir d'une quantité de dents de peigne fissurées (40) et des conditions de fabrication, dans lequel les conditions de fabrication sont exprimées par la formule suivante :

$$J = P / (v \times a \times t),$$

   où J est une densité d'énergie de source de chaleur, P est une puissance de laser ou de faisceau d'électrons, v est une vitesse de balayage, a est un pas de balayage, et t est une épaisseur de couche.

3. Procédé d'évaluation des fissures d'un objet fabriqué de manière additive selon la revendication 1, dans lequel une composition améliorée présentant une sensibilité aux fissures plus faible est dérivée sur la base d'un résultat d'évaluation obtenu lors de l'évaluation, la composition améliorée est utilisée dans la fabrication de manière additive, la sensibilité aux fissures du dispositif d'évaluation des fissures (10) fabriqué est évaluée, et l'amélioration de la composition et l'évaluation de la sensibilité aux fissures sont ensuite répétées pour dériver une composition présentant une sensibilité aux fissures plus faible.

4. Dispositif d'évaluation des fissures (10) configuré pour évaluer la sensibilité aux fissures d'un objet fabriqué de manière additive, le dispositif d'évaluation des fissures (10) comprenant :

   une partie de corps (1), une partie de base (2) opposée à la partie de corps (1), une partie de connexion (3) reliant un côté d'extrémité de la partie de corps (1) et la partie de base (2), une partie formant encoche (9) reliant un autre côté d'extrémité de la partie de corps (1) et la partie de base (2), et une partie à dents de peigne (4) reliant, par des dents de peigne (40), la partie de corps (1) et la partie de base (2) entre la partie de connexion (3) et la partie formant encoche (9), dans lequel le dispositif d'évaluation de fissures (10) est l'objet fabriqué de manière additive, le dispositif d'évaluation de fissures (10) étant **caractérisé en ce qu'**une surface incurvée avant (5) est prévue au niveau de l'autre extrémité de la partie de corps (1) dans le sens de la longueur de la partie de corps (1), des surfaces latérales incurvées (6) sont prévues des deux côtés de la surface incurvée avant (5) dans le sens de la largeur de la partie de corps (1), et la surface incurvée avant (5) de la partie de corps (1) et la partie à dents de peigne (4) sont reliées l'une à l'autre via la partie formant encoche (9).

FIG. 1

FIG. 2A

FIG. 2B

FIG. 3

FIG. 4

(a) Prepare raw material powder

⇩

(b) Additively manufacture by LPBF method or the like

⇩

(c) Observe crack evaluation device during manufacturing/after manufacturing

⇩

(d) Separate crack evaluation device and plate

(f) Improved composition

⇩

(e) Evaluate number of cracks and pattern of cracks of comb teeth

⇩

(g) Complete power composition development

# FIG. 5

FIG. 6

FIG. 7

FIG. 8

**EP 4 509 248 B1**

REFERENCES CITED IN THE DESCRIPTION

**Patent documents cited in the description**

- WO 2023080190 A1
- WO 2023068268 A1

- CN 108817386 A

**Non-patent literature cited in the description**

- *Residual Stress Relief Technology Using Phase Transformation in Metal Additive Manufacturing: Journal of Smart Processing*, July 2021, vol. 10 (4), 163-170